# EUROPEAN PATENT SPECIFICATION

(11) **EP 0 616 600 B1**
(45) Date of publication and mention of the grant of the patent: **28.02.1996**
(21) Application number: 92924940.7
(22) Date of filing: 11.12.1992
(51) Int. Cl.: C01B 3/24, C09C 1/48

(54) **A METHOD FOR DECOMPOSITION OF HYDROCARBONS**
VERFAHREN ZUR ZERSETZUNG VON KOHLENWASSERSTOFFEN
PROCEDE DE DECOMPOSITION DES HYDROCARBURES

(30) Priority: 12.12.1991 NO 914908
(43) Date of publication of application: 28.09.1994
(73) Proprietor: KVAERNER ENGINEERING A/S, N-1324 Lysaker (NO)
(72) Inventor: LYNUM, Steinar, N-0284 Oslo (NO); HAUGSTEN, Kjell, N-0379 Oslo (NO); HOX, Ketil, N-7021 Trondheim (NO); HUGDAHL, Jan, N-7011 Trondheim (NO); MYKLEBUST, Nils, N-7030 Trondheim (NO)
(74) Representative: Baverstock, Michael George Douglas
(86) International application number: NO9200197
(87) International publication number: WO9312031

(56) References cited:
- DE-C- 3 631 015
- US-A- 4 101 639

## Description

The invention concerns a method for the removal of fouling of apparatus during the decomposition of hydrocarbons.

During the process of pyrolytic decomposition of hydrocarbons into hydrogen and carbon, a complete dehydrogenization of the carbon will not always occur, with the result that deposits are very easily formed in the reaction apparatus, both in channels in torches, in the openings between the torch electrodes and in the actual reaction chamber. These deposits can be extremely hard and difficult to remove and they are particularly prevalent in the peripheral areas, i.e. on the walls, partly due to the fact that the temperature is usually lower there, thus leading to a more incomplete decomposition process as well as a greater tendency to form deposits.

From US-4 101 639 is known a pyrolytic method for the production of carbon black. Water vapour is fed by tangential streams at a rate high enough to create a reliable vapour layer protecting the walls of the reaction chamber from high temperatures of the plasma stream. The vapour layer will also protect against a deposition of condensed carbon on the walls when hydrocarbon gases are used as the heat carrier to form the plasma stream.

Such problems are particularly crucial in narrow openings, in pipes and channels which transport the hydrocarbon medium, such as in lead-in tubes, or in the gaps between electrodes, where there is the risk of some intrusion of carbon particles. These problems can lead to a complete blockage of the apparatus, thus causing the decomposition process to be interrupted or to operate in an unsatisfactory manner. For this reason a number of pyrolytic processes can only be conducted intermittently and not continuously, which makes the process considerably more expensive and may even make it unprofitable.

The object of the present invention is to provide a method whereby these problems can be avoided. A further object of the invention is to provide a method which thereby can also provide an increase in the yield and to some extent improve the process performed by means of the apparatus.

These objects are achieved by a method which is characterized by the patent claim presented.

In the invention there is introduced into a pyrolytic burner, and particularly a plasma torch, an atmosphere which does not influence the pyrolytic process, but which is capable of reacting with the carbon deposits or sediments and convert these into volatile materials. In this connection it can be especially advantageous to use CO₂ gas as a cleansing agent or cleansing gas, which is supplied to the torch through the channels between the electrodes. A second advantageous alternative for this purpose is the use of H₂O in vapour form. Gas supplies of this type will react in the torch with the deposited carbon and convert it to CO gas.

In principle, the cleansing process according to the invention is an oxidation of the deposits, but the unique aspect of the invention is that the oxygen is used in the form of a compound. A stream of oxygen or air has previously been used in order to remove impurities and to clean channels of this kind, but the obvious disadvantage of this method is that the reaction is too rapid and too strong, which can easily result in a reheating and disturbance of the actual pyrolytic process. Thus it is surprising that by using oxygen in the form of a compound in the invention it is possible to achieve a rapid and effective cleansing of impurities from the channels as well as the removal of already formed impurities without the actual process being thereby affected. In addition there is the advantage that carbon dioxide and naturally also H₂O are less dangerous materials which are more easily handled, while at the same time carbon dioxide has the advantage that those products which are used for cleaning are an integral part of the actual final product from the pyrolysis.

In the following section the invention will be described in more detail by means of an embodiment.

In a plasma torch of the type described in the applicant's Norwegian patent application 91 4907 (WO-A-93 12 633), in addition to the supplied medium it will be possible to supply CO₂ gas in limited, suitable amounts in the spaces between the electrodes 2, 3 and 4 and in the space between the lead-in tube 1 and the innermost electrode 2, as well as through the lead-in tube. With such a supply of cleansing agent it will be possible to keep the torch in continuous operation for extended periods.

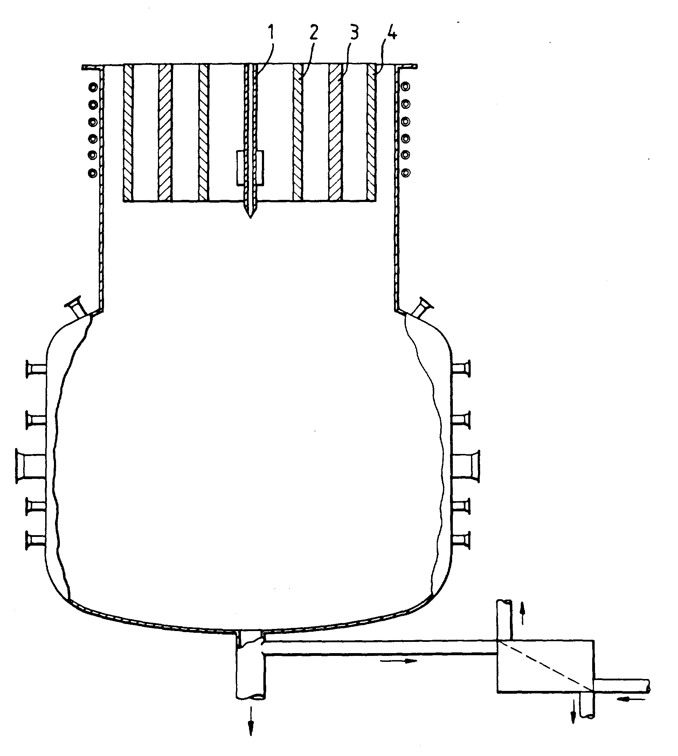

## Claims

1. A method for removal of fouling by oxidation during pyrolytic decomposition of hydrocarbons into carbon and hydrogen wherein there are utilized a plasma torch and a reaction chamber, characterized in that to the torch in its gaps, pipes and openings as well as in the fouled reaction chamber near its walls, CO₂ or H₂O are supplied in gas form as a cleansing agent.

## Patentansprüche

1. Verfahren zum Entfernen von Ablagerungen durch Oxidieren während der pyrolytischen Zersetzung von Kohlenwasserstoffen zu Kohlenstoff und Wasserstoff unter Verwendung eines Plasmabrenners und einer Reaktionskammer,
dadurch **gekennzeichnet**, daß dem Brenner in seinen Spalten, Röhren und Öffnungen und der mit Ablagerungen belasteten Reaktionskammer in der Nähe ihrer Wände CO₂ oder H₂O in Gasform als Reinigungsmittel zugeführt wird.

## Revendications

1. Procédé pour enlever de la salissure incrustée, par oxydation au cours d'une décomposition pyrolytique d'hydrocarbures donnant du carbone et de l'hydrogène, procédé dans lequel on utilise une torche à plasma et une chambre de réaction, procédé caractérisé en ce qu'on fournit CO₂ ou H₂O en forme gazeuse, à titre d'agent de nettoyage ou de récurage à la torche dans ses interstices, ses tubes et ses ouvertures ainsi qu'au voisinage de la paroi de la chambre salie de réaction.
